# EUROPEAN PATENT APPLICATION

(11) **EP 2 600 116 A1**
(43) Date of publication of application: **05.06.2013**
(21) Application number: 11812226.6
(22) Date of filing: 04.07.2011
(51) Int. Cl.: G01F 1/00, G01F 1/684, G01F 1/692

(54) **FLOW MEASUREMENT STRUCTURE AND FLOW MEASUREMENT DEVICE**

(30) Priority: 26.07.2010 JP 2010167417
(71) Applicant: Omron Corporation, Kyoto-shi, Kyoto 600-8530 (JP)
(72) Inventor: UEDA, Naotsugu, Shimogyo-ku, Kyoto-shi, Kyoto 600-8530 (JP); YAMAMOTO, Katsuyuki, Shimogyo-ku, Kyoto-shi, Kyoto 600-8530 (JP); NOZOE, Satoshi, Shimogyo-ku, Kyoto-shi, Kyoto 600-8530 (JP); MAEDA, Shuji, Shimogyo-ku, Kyoto-shi, Kyoto 600-8530 (JP); TSUKUMA, Yuji, Shimogyo-ku, Kyoto-shi, Kyoto 600-8530 (JP)
(74) Representative: Kilian Kilian & Partner
(86) International application number: PCT/JP2011/065292
(87) International publication number: WO 2012/014633

(57) **Abstract**

A flow measurement device (1) according to the present invention includes a main flow channel (5) through which fluid flows, and a secondary flow channel unit (20) where the fluid is diverted from the main flow channel (5), supplied to a flow amount detection element (12) and thereafter returned to the main flow channel (5). The secondary flow channel unit (20) includes a diversion flow channel (23) through which the fluid is diverted from the main flow channel (5) and returned to the main channel (5) without the fluid being supplied to the flow amount detection element (12), and a detection channel (27) in which the fluid is diverted from the diversion flow channel (23) and provided to the flow amount detection element (12). The diversion flow channel (23) includes a smooth flow part (45) in which the fluid flows smoothly between the two ends connecting to the main flow channel (5), and a first chamber (41) and a second chamber (42) which, adjacent to the smooth flow part (45), are divided by a partition (43) provided so as to obstruct flow of the fluid. The two ends of the detection channel (27) are connected to the first chamber (41) and the second chamber (42).

## Description

### TECHNICAL FIELD

The present invention relates to a device for measuring a flow rate of fluid which flows through a flow channel, particularly to a flow rate measurement device and a flow measurement structure for obtaining a total flow rate of the fluid which flows through the flow channel based on fluid flowing in a secondary flow channel which is derived from a main flow channel.

### BACKGROUND ART

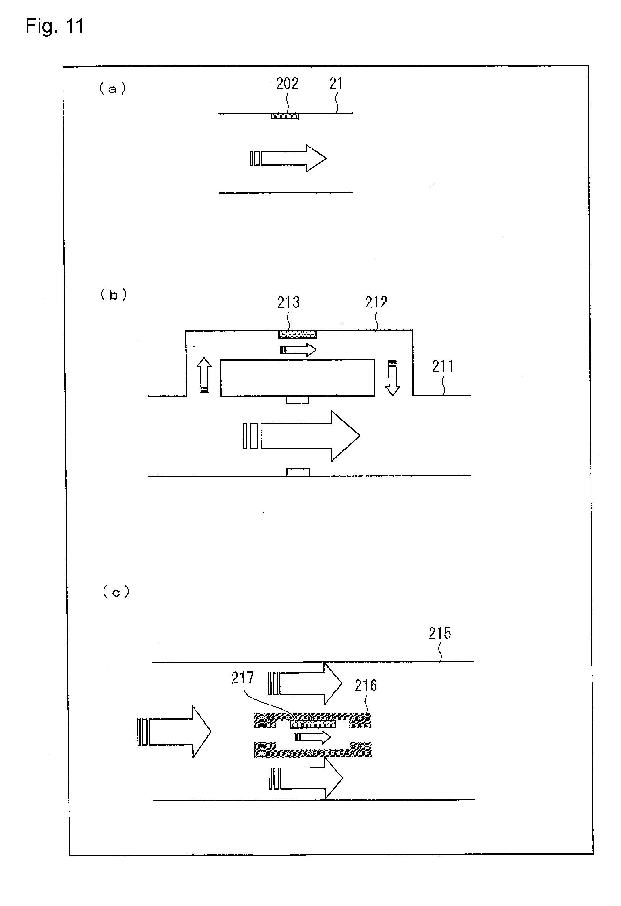

Generally, there exist the flow measurement devices of a straight tube type and a diverting type. As illustrated in Fig. 11A, the flow measurement device of straight tube type has a constitution in which a flow rate detection element 202 is directly disposed at a conduit 201 through which fluid of gas or liquid to be measured flows.

The flow measurement device of diverting type has a constitution, as illustrated in Fig. 11B, in which an introduction port toward a diversion flow channel 212 is disposed at a main flow tube 211, and a flow rate detection device 213 is disposed at the diversion flow channel 212, or a constitution, as illustrated in Fig. 11C, in which a diversion flow channel 216 is disposed in a main flow tube 215, and a flow rate detection device 217 is disposed at the diversion flow channel 216.

Generally, in the flow measurement device of straight tube type, fluid flowing in a pipe is directly measured so that, in the case of measuring fluid of a large flow rate, the flow velocity needs to be lowered to the measurable region of the flow rate detection element. Therefore, the diameter of the pipe needs to be enlarged, so that the miniaturization of the device is limited.

Accordingly, when fluid of a large flow rate is measured, the flow measurement device of diverting type is used. In the flow measurement device of diverting type, the diversion flow channel is derived from the main flow channel, and a flow velocity of the fluid flowing through the diversion flow channel is measured by the flow rate detection element, thereby obtaining a total flow rate based on a diversion ratio between the main flow channel and the diversion flow channel, and the flow velocity at the diversion flow channel.

In Patent Document 1, a flow measurement device 100 of diverting type is described as follows. Specifically, as illustrated in Fig. 12A, Patent Document 1 describes the flow measurement device 100 in which a secondary flow channel 114 is disposed on a main flow channel 112 so as to extend over an outer circumferential surface of the main flow channel 112. In the flow measurement device 100, introduction ports 115 are disposed at both left and right sides of an inner wall of the main flow channel 112 upstream of an orifice (not illustrated), and discharge ports 116 are disposed at both left and right sides thereof downstream of the orifice. Then, an upper end portion of an introduction flow channel 117 extending upward from the introduction port 115 and an upper end portion of a discharge flow channel 118 extending upward from the discharge port 116 are connected by a first secondary flow channel 119 so as to be communicated with each other. Moreover, upper ends of the left and right introduction flow channels 117 are connected by a second secondary flow channel 120 so as to be communicated with each other, and upper ends of the left and right discharge flow channels 118 are connected by a second secondary flow channel 121 so as to be communicated with each other. Furthermore, central portions of the second secondary flow channels 120, 121 are connected by a horizontal detection flow channel 122 so as to be communicated with each other, and a flow rate detection element (not illustrated) for measuring a flow velocity of gas is disposed in the detection channel 122.

Then, the flow velocity of the gas, which passes through the detection flow channel 122, is measured, and the total flow rate of the gas, which flows through the flow measurement device 100, is obtained based on the measured flow velocity at the detection flow channel, and the diversion ratio between the main flow channel 112 and the detection flow channel 122.

### RELATED ART DOCUMENTS

### PATENT DOCUMENTS

Patent Document 1: Japanese Unexamined Patent Publication No. 2006-308518 (published on November 9, 2006)

### SUMMARY OF THE INVENTION

### PROBLEMS TO BE SOLVED BY THE INVENTION

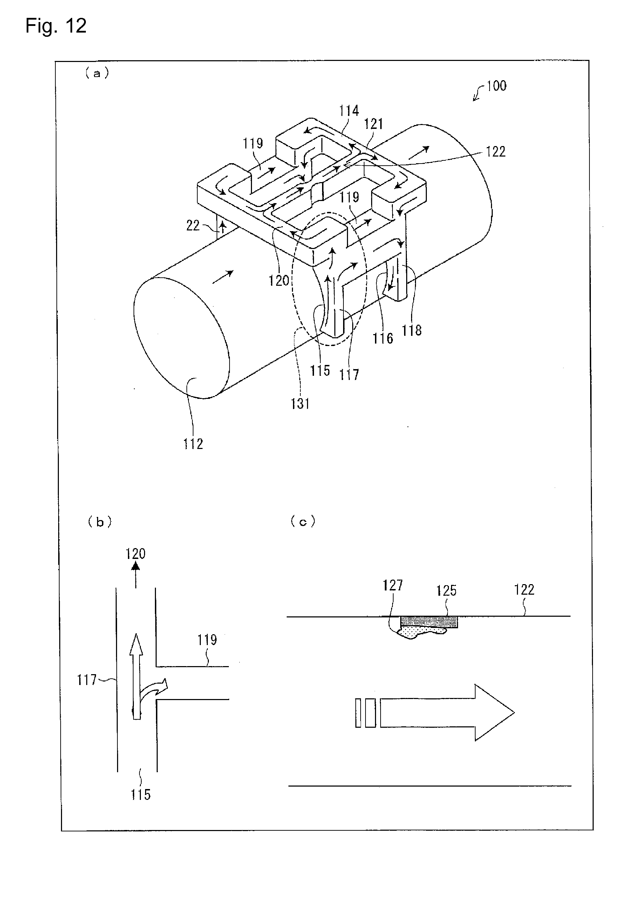

However, in the constitution described in Patent Document 1 mentioned above, a following problem occurs. Namely, in the constitution of Patent Document 1, most of the dust, which has entered the introduction flow channel 117 from the introduction port 115, does not flow through the first secondary flow channel 119, the discharge flow channel 118, and the discharge port 116, but flows through the second secondary flow channel 120 and the detection flow channel 122. This is because, as illustrated in Fig. 12B, the introduction flow channel 117 and the first secondary flow channel 119 are connected perpendicularly to each other so that the dust, which has entered from the introduction port 115, moves directly straight (namely, moves in the direction toward the second secondary flow channel 120 in the introduction flow channel 117) due to an inertial force with high probability. Note that, Fig. 12B is an enlarged schematic view of the portion of a region 131 in Fig. 12A.

Then, with this, dust 127 adheres to a flow rate detection element 125 which is disposed at the detection flow channel 122, so that the measurement accuracy of the flow rate detection element 125 is degraded (refer to Fig. 12C).

Moreover, in the constitution of Patent Document 1, the introduction flow channel 117 and the second secondary flow channel 120 are also perpendicularly connected so that the dust would be accumulated with high probability at the connection portion between the introduction flow channel 117 and the second secondary flow channel 120. With this, the amount of gas flowing in the second secondary flow channel 120 changes, so that the diversion ratio between the main flow channel 112 and the detection flow channel 122 is made to be changed, then, there is a possibility that the flow measurement device 100 cannot measure the total flow rate of gas with accuracy.

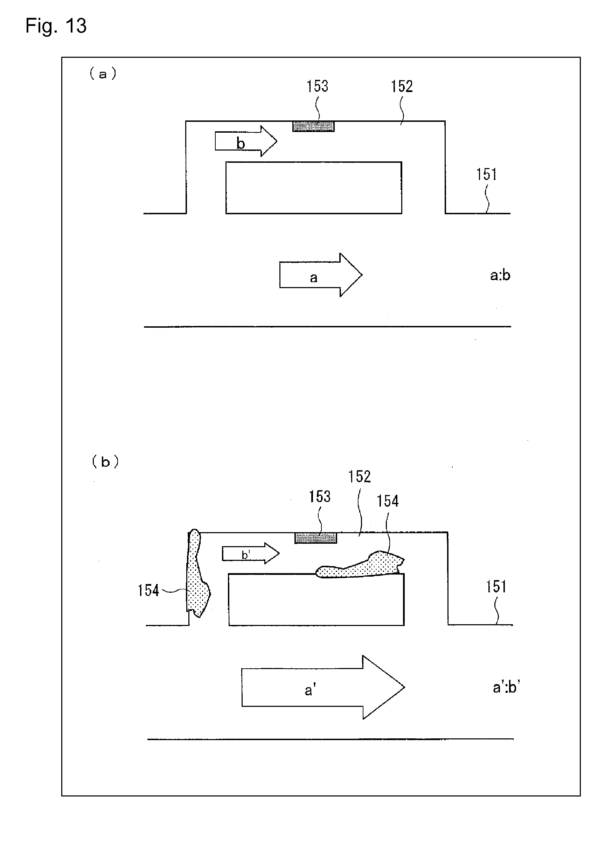

A schematic explanation will be made with reference to Figs. 13A and 13B. Figs. 13A and 13B are schematic views illustrating a flow measurement device of diverting type, and Fig. 13A illustrates that the amount of gas flowing through a main flow channel 151 is designated as a, and the amount of gas flowing through a secondary flow channel 152 is designated as b. Then, a flow rate detection element 153 is disposed at the secondary flow channel 152. In the flow measurement device of diverting type, as mentioned above, the total flow rate is calculated by using the flow rate of the secondary flow channel 152 which is detected by the flow rate detection element 153 and the diversion ratio (here, a : b) between the main flow channel 151 and the secondary flow channel 152.

However, as illustrated in Fig. 13B, when dust 154 is accumulated on the secondary flow channel 152, the flow rate of gas flowing through the secondary flow channel 152 changes from b to b', and also the flow rate of gas flowing through the main flow channel 151 changes from a to a'. Accordingly, if the total flow rate is obtained under this state based on an assumption that the diversion ratio is a : b, an error is caused because the actual diversion ratio is a' : b'.

The present invention has been made taking into account the problem, and its objective is to actualize a flow measurement device which is less susceptible to the dust.

### MEANS FOR SOLVING THE PROBLEM

In order to solve the problem mentioned above, a flow measurement structure according to the present invention includes: a main flow channel through which fluid flows; and a secondary flow channel where the fluid is diverted from the main flow channel, supplied to a detection element for measuring a flow rate, and thereafter returned to the main flow channel, wherein the secondary flow channel includes a first tributary channel where the fluid is diverted from the main flow channel and returned to the main channel without being supplied to the detection element, and a second tributary channel where the fluid is diverted from the first tributary channel and supplied to the detection element, and wherein the first tributary channel includes a smooth flow portion in which the fluid flows smoothly between both end portions connected with the main flow channel, and a first chamber and a second chamber which are adjacent to the smooth flow portion, and divided by a partition provided so as to obstruct a flow of the fluid, and both end portions of the second tributary channel are respectively connected with the first chamber and the second chamber.

According to the constitution, the fluid, which has entered the first tributary channel, smoothly flows through the smooth flow portion and returns to the main flow channel, and therefore, it is difficult for dust to be accumulated at the first tributary channel.

Furthermore, a part of the fluid, which has entered the first tributary channel, flows into the second tributary channel by the partition from the end portion which is connected with the first chamber or the second chamber. On the other hand, the dust, which has entered the first tributary channel, passes through the smooth flow portion due to its easiness of flowing, and therefore, it is difficult for the dust to enter the second tributary channel.

As described above, according to the constitution mentioned above, the dust, which has entered the first tributary channel, is not accumulated, and tends to flow directly toward the main flow channel, and it is difficult for the dust to enter the second tributary channel, and therefore, it is difficult for the dust to adhere to the detection element for measuring the flow rate which is disposed at the second tributary channel.

Accordingly, the results, which have been detected by the detection element, seldom suffer from an influence of the dust, and therefore, a flow measurement structure whose errors caused by the dust are minor can be actualized.

### EFFECT OF THE INVENTION

As described above, the flow measurement structure according to the present invention has a constitution which includes the main flow channel through which the fluid flows, and the secondary flow channel where the fluid is diverted from the main flow channel, supplied to the detection element for measuring the flow rate, and thereafter returned to the main flow channel, wherein the secondary flow channel includes the first tributary channel where the fluid is diverted from the main flow channel and returned to the main channel without being supplied to the detection element, and the second tributary channel where the fluid is diverted from the first tributary channel and supplied to the detection element, and wherein the first tributary channel includes the smooth flow portion through which the fluid flows smoothly between the both end portions connected with the main flow channel, and the first chamber and the second chamber which are adjacent to the smooth flow portion, and divided by the partition provided so as to obstruct the flow of the fluid, and the both end portions of the second tributary channel are respectively connected with the first chamber and the second chamber.

With this, the dust, which has entered the first tributary channel, is not accumulated, and tends to flow directly toward the main flow channel, and it is difficult for the dust to enter the second tributary channel, thereby providing an advantageous effect that an flow measurement structure, whose errors caused by the dust are minor, can be realized.

### BRIEF DESCRIPTION OF THE DRAWINGS

Figs. 1A to 1C are diagrams for illustrating a constitution of a secondary flow channel of a flow measurement device as an embodiment of the present invention, Fig. 1A is the diagram illustrating a cross section of the flow measurement device, Fig. 1B is an enlarged view of a portion of the secondary flow channel portion of the cross sectional view illustrated in Fig. 1A, and Fig. 1C is a perspective view of the secondary flow channel portion.
Figs. 2A and 2B are diagrams illustrating a constitution and an external appearance of the flow measurement device, Fig. 2A is the diagram illustrating the basic constitution of the flow measurement device, and Fig. 2B is the diagram illustrating the external appearance.
Figs. 3A to 3D are diagrams illustrating flow of gas and dust in the flow measurement device, Fig. 3A is the diagram illustrating the flow of gas and dust in a cross section of the flow measurement device, Fig. 3B is the diagram illustrating the flow of gas and dust in a cross section of the secondary flow channel portion, Fig. 3C is the diagram illustrating the flow of gas and dust in an entire of the secondary flow channel portion, and Fig. 3D illustrates a simulation result of the flow of gas in a cross section of the secondary flow channel portion.
Fig. 4 is a diagram illustrating a difference of numbers of passing-through particles between the present embodiment and the conventional constitution.
Figs. 5A and 5B are diagrams for illustrating a structure of a flow rate detection element in the flow measurement device, Fig. 5A is the diagram illustrating a state in which gas is not flowing, and Fig. 5B is the diagram illustrating a state in which gas is flowing.
Figs. 6A and 6B are diagrams for illustrating a mode of the constitution of the secondary flow channel portion, Figs. 6A is a perspective view of the flow measurement device which includes the secondary flow channel portion, and Fig. 6B is an enlarged view of a part of Fig. 6A.
Figs. 7A and 7B are diagrams for illustrating a mode of the constitution of the secondary flow channel portion, Figs. 7A is a perspective view of the flow measurement device which includes the secondary flow channel portion, and Fig. 7B is an enlarged view of a part of Fig. 7A.
Figs. 8A to 8C are diagrams for illustrating a mode of a flow channel of a secondary flow channel portion in another embodiment of the present invention, Fig. 8A is a side view of the secondary flow channel portion in the present embodiment, Fig. 8B is a perspective view of the secondary flow channel portion in the present embodiment, and Fig. 8C is a diagram illustrating a flow of gas in the embodiment.
Figs. 9A and 9B are diagrams illustrating a constitution of a flow channel of a secondary flow channel portion in a still another embodiment of the present invention, Fig. 9A is a perspective view illustrating a constitution of the secondary flow channel portion of the present embodiment, and Fig. 9B is a top view illustrating the constitution of the secondary flow channel portion of the present embodiment.
Figs. 10A and 10B are diagrams illustrating a constitution of a secondary flow channel portion in a still another embodiment of the present invention, Fig. 10A is a perspective view illustrating the secondary flow channel portion, and Fig. 10B is a top view of the secondary flow channel portion.
Figs. 11A to 11C are diagrams for illustrating the background art for the present invention.
Figs. 12A to 12C are diagrams for illustrating the conventional art.
Figs. 13A and 13B are diagrams for illustrating the problem in the flow measurement device of diverting type.

### MODE FOR CARRYING OUT THE INVENTION

### (First Embodiment)

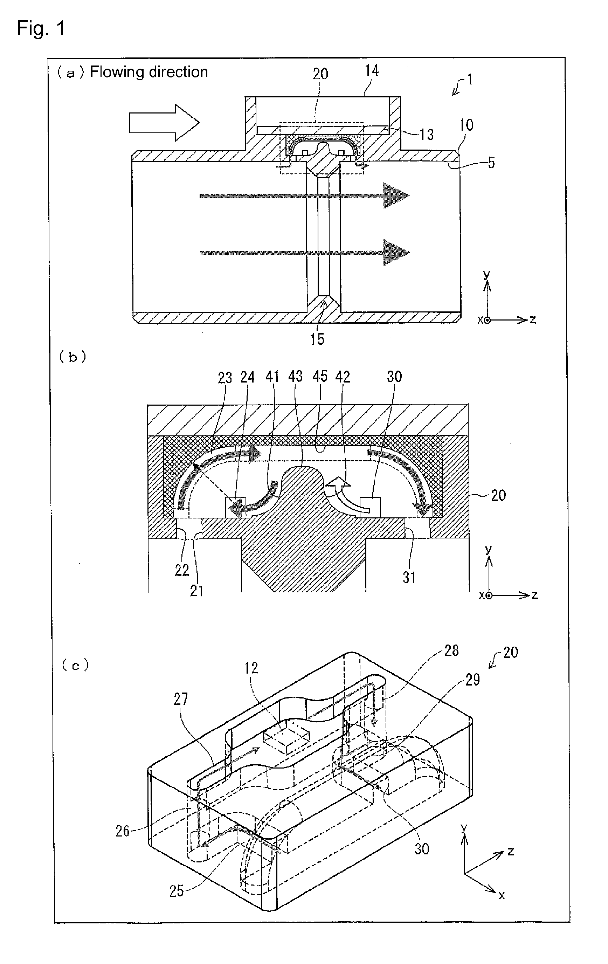

An embodiment of the present invention will be described with reference to Figs. 1A to Fig. 7B hereunder.

A flow measurement device (flow measurement structure) 1 according to the present embodiment is a so called flow measurement device of diverting type, and the provision of a structure described below prevents dust from being accumulated in a flow channel, and also prevents dust from adhering to a flow rate detection element, so that its measurement accuracy can be maintained. Note that, following explanations will be made for a case that an object to be measured by the flow measurement device 1 is gas, but this is not the only case, and liquid may be an object to be measured.

### (Basic Constitution and External Appearance of Flow Measurement Device)

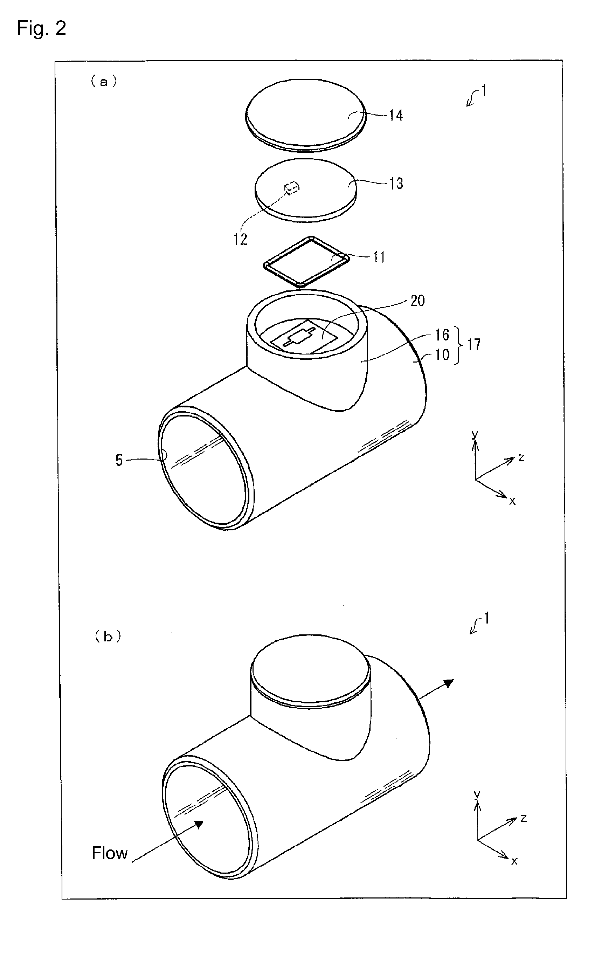

First, with reference to Figs. 2A and 2B, a basic constitution and an external appearance of the flow measurement device 1 will be described. Figs. 2A and 2B are drawings illustrating the constitution and the external appearance of the flow measurement device 1, and Fig. 2A illustrates the basic constitution of the flow measurement device 1, and Fig. 2B illustrates the external appearance of the flow measurement device 1.

As illustrated in Fig. 2A, the flow measurement device 1 is configured by a base member 17 made of synthetic resin in which a secondary flow channel forming portion 16 for forming a secondary flow channel 20 is integrally formed on an outer circumferential surface of a main flow tube 10 having a main flow channel 5, an annular seal member 11 made of an insulating material, such as rubber, a circuit board 13 provided with a flow rate detection element (detection element) 12 on its surface on the base member 17 side, and a cover 14 which covers the circuit board 13.

Then, as illustrated by an arrow in Fig. 2B, when gas flows through the main flow channel 5, a part of the gas flows through a secondary flow channel (described later) which is disposed in the secondary flow channel forming portion 16, and its flow rate is measured by the flow rate detection element 12 which is disposed in the secondary flow channel, thereby obtaining a total flow rate of gas which flows through the flow measurement device 1.

Note that, in the present embodiment, the direction, in which the gas flows in the main tube 10, is defined as a z-direction, the direction, in which the secondary flow channel forming portion 16 is formed on a vertical cross section of the main flow tube 10, is defined as a y-direction, and the direction, which is perpendicular to the y-direction, is defined as an x-direction. Moreover, the x-direction and the y-direction are directions which are perpendicular to each other, and the z-direction is a direction which is perpendicular to a plane including the x-direction and the y-direction.

### (Constitution of Secondary Flow Channel)

Next, with reference to Figs. 1A to 1C, explanations will be made to the secondary flow channel (a diversion flow channel introduction port 21, an introduction channel 22, a diversion flow channel (first tributary channel) 23, a detection channel introduction port 24, a first communication channel (second tributary channel) 25, a second communication channel (second tributary channel) 26, a detection channel (second tributary channel) 27, a third communication channel (second tributary channel) 28, a fourth communication channel (second tributary channel) 29, a detection channel discharge port 30, a diversion flow channel discharge port 31) which are formed in the secondary flow channel forming portion 16. Figs. 1A to 1C are drawings for describing the constitution of the secondary flow channel, Fig. 1A is a drawing illustrating a cross section of the flow measurement device 1, Fig. 1B is an enlarged view of the portion of the secondary flow channel portion 20 in the cross sectional view illustrated in Fig. 1A, and Fig. 1C is a perspective view of the secondary flow channel portion 20.

As illustrated in Fig. 1A, a resistive element (orifice) 15 is disposed at the main flow channel 5, an introduction port to the secondary flow channel is disposed upstream of the resistive element 15, and a discharge port from the secondary flow channel is disposed downstream of the resistive element 15.

A more detailed explanation will be made with reference to Fig. 1B and Fig. 1C. As illustrated, the diversion flow channel introduction port 21, which is an introduction port to the secondary flow channel, is disposed upstream of the resistive element 15 of the main flow channel 5. Then, the diversion flow channel introduction port 21 is connected with the diversion flow channel 23 through the introduction channel 22.

In the diversion flow channel 23, its wall surface, which is positioned farther from the main flow tube 10, has a structure (curbed portion) which forms an arc shape adjacent to the introduction channel 22 in such a way that the flowing direction of the gas changes from a direction (y-direction) perpendicular to the main flow tube 10 to a direction (z-direction) parallel to the main flow tube 10. Moreover, adjacent to the diversion flow channel discharge port 31, the wall surface has a structure (curbed portion) which forms an arc shape in such a way that the flowing direction of the gas changes from the direction (z-direction) parallel to the main flow tube 10 to a direction which is perpendicular to the main flow tube 10 and is headed for the main flow tube 10 (minus y-direction).

As a result, the gas flows smoothly in the flow channel (smooth flow portion 45) along the wall surface which is positioned farther from the main flow tube 10 of the diversion flow channel 23, and the dust, which has entered the diversion flow channel 23, tends to return to the main flow channel 5 because the dust flows along the wall surface due to the inertial force.

Moreover, the wall surface, which is positioned closer to the main flow tube 10, is constituted along the main flow tube 10, and a partition 43 is formed in the vicinity of its center so that the distance between the side wall positioned farther from the main flow tube 10 and the side wall positioned closer to the main flow tube 10 is shortened so as to narrow the flow channel of the diversion flow channel 23. Moreover, an arc shape is formed between the portion along the main flow tube 10 and the portion where the flow channel of the diversion flow channel 23 is narrowed.

Note that, in the present embodiment, among the region sandwiched between the smooth flow portion and the partition, a portion closer to the diversion flow channel introduction port 21 is defined as a first chamber 41, and a portion closer to the diversion flow channel discharge port 31 is defined as a second chamber 42.

Furthermore, the detection channel introduction port 24 is disposed in a direction (minus x-direction) perpendicular to the arc at a portion which substantially corresponds to the center of the arc (center of curvature) adjacent to the introduction channel 22, and faces the side wall positioned closer to the main flow tube 10 of the diversion flow channel 23. The detection channel discharge port 30 is disposed in a direction (minus x-direction) perpendicular to the arc at a portion which substantially corresponds to the center of the arc (center of curvature) adjacent to the diversion flow channel discharge port 31, and faces the side wall positioned closer to the main flow tube 10 of the diversion flow channel 23. The first communication channel 25 for introducing a part of the gas, which has flown into the diversion flow channel 23, to the detection channel 27 is connected with the detection channel introduction port 24. The first communication channel 25 includes an arc-shaped curbed portion so that the flowing direction of gas changes from the minus x-direction to the minus z-direction, and is connected with the second communication channel 26. The second communication channel 26 is disposed in the y-direction, and is connected with the detection channel 27.

The detection channel 27 is a flow channel which is disposed in the z-direction, and has a structure in which its width of flow channel at the central portion is wider than that at the end portion. Then, the flow rate detection element 12, which is mounted on the circuit board 13, is disposed at the central portion. Then, the detection channel 27 is connected with the third communication channel 28 which is disposed in the y-direction, and the third communication channel 28 is connected with the fourth communication channel 29. The fourth communication channel 29 includes an arc-shaped curbed portion so that the flowing direction of gas changes from the z-direction to the x-direction. Then, the fourth communication channel 29 is connected with the detection channel discharge port 30.

As mentioned above, a part of the gas, which has flown into the diversion flow channel introduction port 21, flows from the introduction channel 22, the diversion flow channel 23, the detection channel introduction port 24, the first communication channel 25, the second communication channel 26, the detection channel 27, the third communication channel 28, the fourth communication channel 29, the detection channel discharge port 30, and the diversion flow channel discharge port 31, in this order, as illustrated in Figs. 1A to 1C. Note that, the flowing direction of gas is not limited to this, and even when the flowing direction is opposite, the flow measurement device can measure the flow rate of gas.

With this, the flow rate of gas, which has flown into the detection channel 27, is measured by the flow rate detection element 12, and the total flow rate of the gas flowing through the flow measurement device 1 can be obtained by using the diversion ratio between the gas flowing through the main flow channel 10 and the gas flowing through the detection channel 27.

Moreover, the wall surface of the diversion flow channel 23 has the arc shape so that the dust can be prevented from being accumulated. Furthermore, the detection channel introduction port 24 is positioned at the center of the arc of the side wall of the diversion flow channel 23 which has the arc shape so that the amount of dust, which flows into the detection channel 27, can be decreased. With this, the dust can be prevented from adhering to the flow rate detection element 12, and the measurement accuracy of the flow measurement device 1 can be maintained.

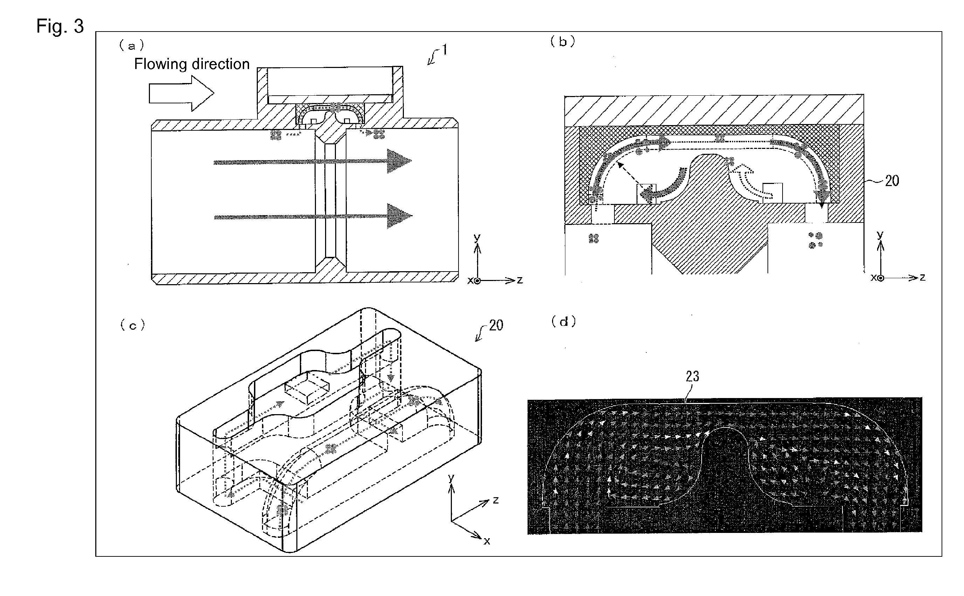

A specific explanation will be made with reference to Figs. 3A to 3D. Figs. 3A to 3D are diagrams illustrating the flow of gas and dust in the flow measurement device 1, Fig. 3A is the diagram illustrating the flow of gas and dust in a cross section of the flow measurement device 1, Fig. 3B is the diagram illustrating the flow of gas and dust in a cross section of the secondary flow channel portion 20, Fig. 3C is the diagram illustrating the flow of gas and dust in the entirety of the secondary flow channel portion 20, and Fig. 3D illustrates a simulation result of the flow of gas in a cross section of the secondary flow channel portion 20.

As illustrated in Fig. 3A, when a part of the gas and dust, which are flowing through the main flow channel 5, flows into the secondary flow channel portion 20 from the diversion flow channel introduction port 21, as illustrated in Fig. 3B, the dust passes through the portion close to the wall surface of the diversion flow channel 23, and moves in the direction toward the diversion flow channel discharge port 31. This is because the dust, which has flown into from the diversion flow channel introduction port 21, tends to flow in a direction in which the dust can easily flow. As a result, there is a low probability that the dust flows into the detection channel introduction port 24.

On the other hand, a part of the gas strikes against the wall surface (partition 43), which is positioned close to the main flow tube 10, at the portion where the flow channel in the vicinity of the center of the diversion flow channel 23 is narrowed, and flows directly into the detection channel introduction port 24. As illustrated in Fig. 3C, the gas, which has flown into the detection channel introduction port 24, flows through the detection channel 27, and returns to the diversion flow channel 23 through the detection channel discharge port 30.

As described above, the present embodiment has the constitution in which a part of the gas flows into the detection flow channel 27, whereas it is difficult for the dust to flow into the detection channel 27.

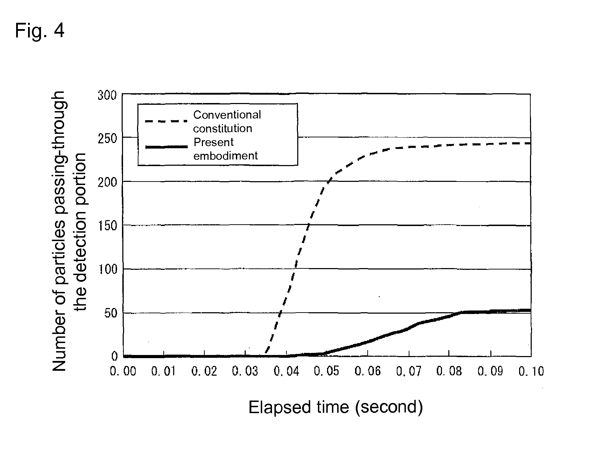

Next, with reference to Fig. 4, in the present embodiment and the conventional constitution, the analysis results of the amounts of dust flowing into the detection channel will be described. Fig. 4 is a graph which illustrates the comparison result of the number of passing-through particles between the present embodiment and the conventional constitution. Note that, in this analysis, the flow rate of the flowing-in gas is 100 liter/min, and the flowing-in particle has a diameter of 0.1µm, and a specific gravity of 3000 kg/m³, and the number thereof is 1000000 particles.

The analysis results are illustrated in Fig. 4. In Fig. 4, the broken line indicates the counted number in the conventional constitution, and the solid line indicates the counted number in the present invention. As illustrated in Fig. 4, in the conventional constitution, the counted number of particles suddenly increases around after the elapsed time of 0.03s, whereas in the present embodiment, the counted number of particles merely slightly increases around the elapsed time of 0.06s. In this manner, in the present embodiment, the particles (namely, the dust) are prevented from entering the detection channel.

### (Structure of Flow Rate Detection Element)

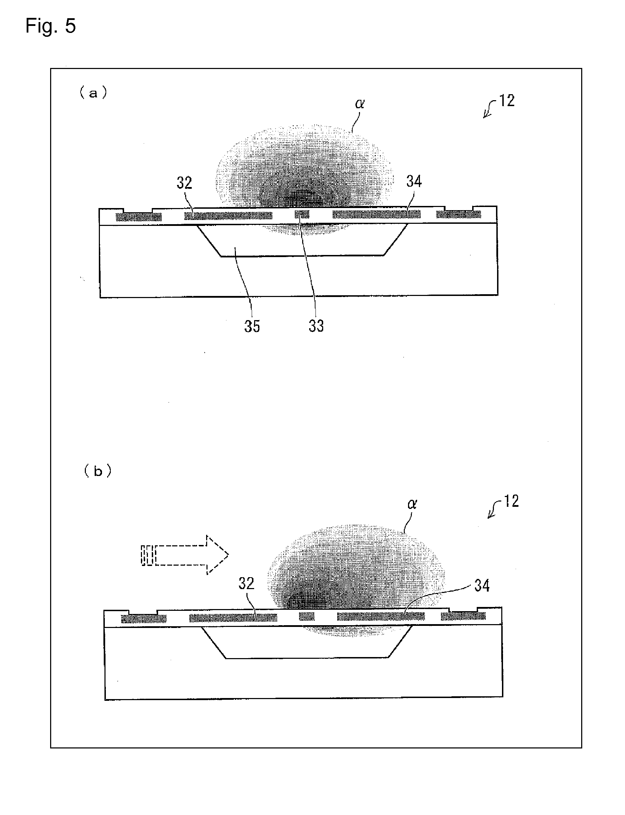

Next, with reference to Figs. 5A and 5B, the structure of the flow rate detection element 12 will be described. Figs. 5A and 5B are diagrams for illustrating the structure of the flow rate detection element 12, Fig. 5A is the diagram illustrating a state in which gas is not flowing, and Fig. 5B is the diagram illustrating a state in which gas is flowing.

The kind of the flow rate detection element 12 is not specifically limited as long as the flow rate of gas can be measured, and in the present embodiment, a flow sensor having a heater and thermopiles is used.

As illustrated in Fig. 5A, in the flow rate detection element 12, a cavity 35 is formed on one surface of a substrate 36 by etching, and an insulation thin film 37 is covered on the cavity 35 so as to retain the edge of the insulation thin film 37 on the substrate 36. A heater 33 is formed with a poly-silicon at the central portion of the insulation thin film 37, and thermopiles 32, 34 are respectively disposed upstream and downstream of the heater 33. The thermopiles 32, 34 are configured by alternatively connecting line elements of Al and line elements of poly-silicon so as to be disposed in zigzags. The thermopiles 32, 34 are symmetrically disposed with respect to the heater 33 so as to measure the temperatures at the symmetrical positions on both sides of the heater 33.

Then, at the time of measurement, the heater 33 is generating heat at a predetermined temperature so that a predetermined temperature distribution α (temperature gradient) occurs around the heater 33. Because the thermopiles 32, 34 are symmetrically disposed, when the gas does not flow over the heater 33, the temperatures detected by the thermopiles 32, 34 are equal to each other so that the temperature difference becomes zero.

On the other hand, as illustrated in Fig. 5B, when a flow of gas is generated over the heater 33, the heat of the heater 33 is transferred downstream so that the temperature distribution α is shifted downstream, and therefore, the detected temperature of the downstream thermopile 34 rises, and also the detected temperature of the upstream thermopile 32 drops, thereby causing a temperature difference between the detected temperatures of the thermopiles 32, 34. This change of the temperature difference is proportional to the mass flow rate of the gas so that the mass flow rate of the gas can be obtained based on the change of the temperature difference. Therefore, the total flow rate in the flow measurement device 1 can be obtained based on the obtained mass flow rate and the diversion ratio between the main flow channel 5 and the secondary flow channel portion 20.

### (Constitution of Secondary Flow Channel Portion)

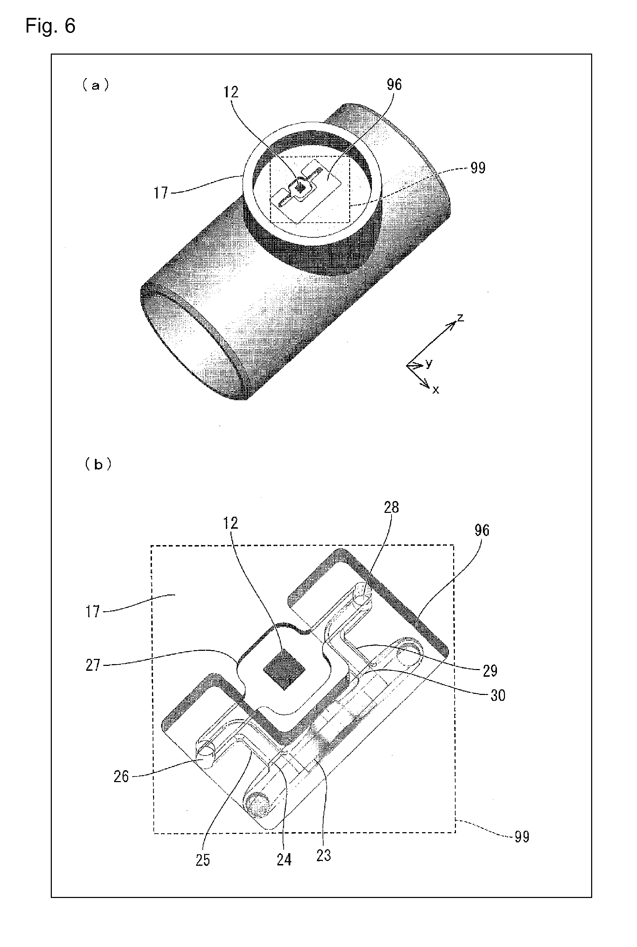

Next, a mode of the secondary flow channel portion 20 will be described with reference to Figs. 6A to 7B. Figs. 6A and 6B are diagrams for illustrating the mode of the constitution of the secondary flow channel portion 20, Fig. 6A is a perspective view of the flow measurement device which includes the secondary flow channel portion 20, and Fig. 6B is an enlarged view of a region 99 in Fig. 6A.

As illustrated in Figs. 6A and 6B, the secondary flow channel portion 20 may be constituted in such a way that the detection channel 27 is formed in the base member 17, and the portion including the diversion flow channel 23, the detection channel introduction port 24, the first communication channel 25, the second communication channel 26, the third communication channel 28, the fourth communication channel 29, and the detection channel discharge port 30, is defined as a secondary flow channel portion 96 so as to be formed with an intermediate member.

The reason is as follows. There is no problem when the flow rate detection element 12 is mounted on the circuit board 13, and the circuit board 13 is combined with the base member 17 in some way. However, in the case of a constitution in which the flow rate detection element 12 is disposed at an intermediate member, there is a possibility that a misalignment of the intermediate member, and the like, may destroy the positional relationship between the flow rate detection element 12 and the detection channel 27 so that a characteristic change may be caused.

According to the constitution, because the detection channel 27, where the flow rate detection element 12 is disposed, is formed on the base member 17 side with which the circuit board 13 is combined, even when the misalignment of the intermediate member occurs, its influence can be suppressed.

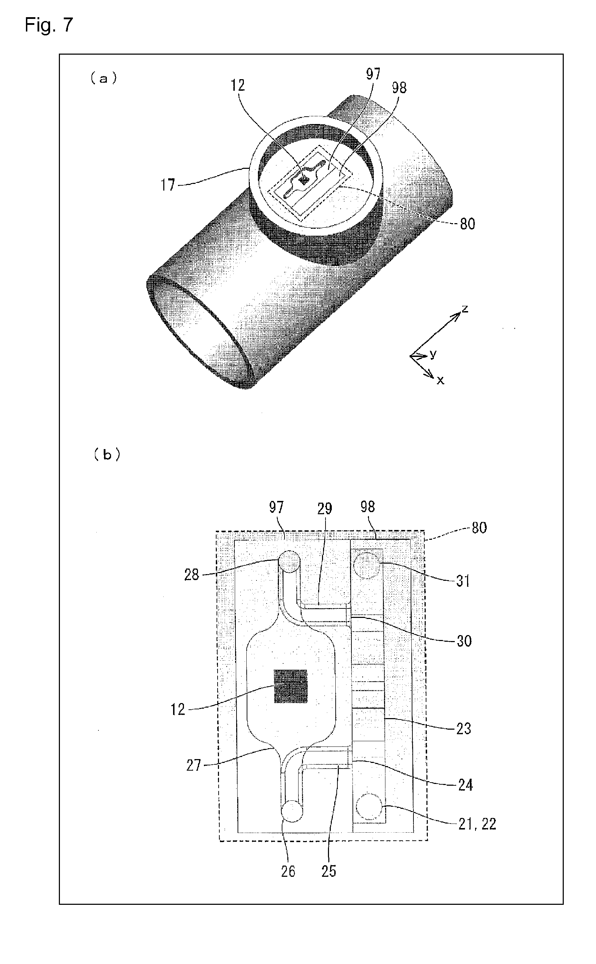

Moreover, Figs. 7A and 7B are diagrams for illustrating a mode of the constitution of the secondary flow channel portion 20, Fig. 7A is a perspective view of the flow measurement device which includes the secondary flow channel portion 20, and Fig. 7B is an enlarged view of a region 80 in Fig. 7A.

As illustrated in Figs. 7A and 7B, the secondary flow channel portion 20 may be formed so as to be divided into the base member 17; a first secondary flow channel portion 97 including the first communication channel 25, the second communication channel 26, the detection channel 27, the third communication channel 28, and the fourth communication channel 29; and a second secondary flow channel portion 98 including the diversion flow channel introduction port 21, the introduction channel 22, the diversion flow channel 23, the detection channel introduction port 24, the detection channel discharge port 30, and the diversion flow channel discharge port 31.

### (Second Embodiment)

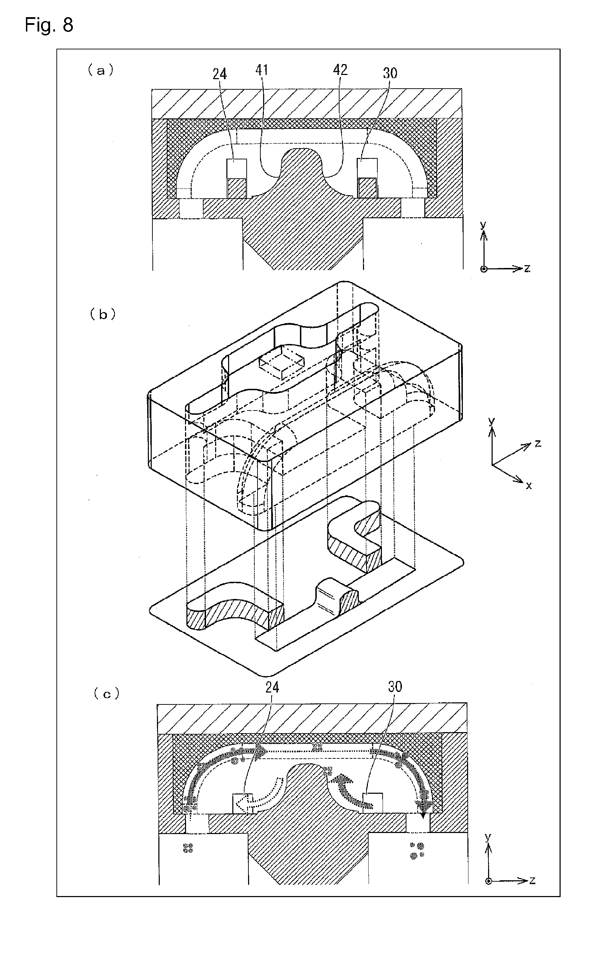

Next, another embodiment of the present invention will be described with reference to Figs. 8A to 8C. Figs. 8A to 8C are diagrams for illustrating another mode of the flow channel of the secondary flow channel portion 20, Fig. 8A is a side view of the secondary flow channel portion 20 in the present embodiment, Fig. 8B is a perspective view of the secondary flow channel portion 20 in the present embodiment, and Fig. 8C is a diagram illustrating a flow of gas in the embodiment. The present embodiment is different from the embodiment with respect to the positions of the detection channel introduction port 24 and the detection channel discharge port 30.

In the embodiment, as illustrated in Fig. 8C, the wall surface of the diversion flow channel 23 has arc shapes, and the detection channel introduction port 24 and the detection channel discharge port 30 correspond to the centers of the arcs, and are disposed at positions facing the wall surface which is positioned closer to the main flow tube 10.

On the other hand, in the present embodiment, as illustrated in Fig. 8A, the detection channel introduction port 24 and the detection channel discharge port 30 are disposed at positions which are shifted from the positions of the embodiment by a distance substantially corresponding to the diameter of the detection channel introduction port 24 in the direction (y-direction) apart from the main flow tube 10, namely, the detection channel introduction port 24 and the detection channel discharge port 30 are positioned at the center of the first chamber 41 and the center of the second chamber 42. Therefore, in the present embodiment, the detection channel introduction port 24 and the detection channel discharge port 30 don't face the wall surface which is positioned closer to the main flow tube 10 of the diversion flow channel 23.

With this, as indicated by an arrow in Fig. 8B, even if dust flows along the wall surface, the dust can be prevented from flowing into through the detection channel introduction port 24. Accordingly, the dust can be more surely prevented from flowing into the detection channel 27. Namely, even if the dust has struck against the partition 43, and flowed into in the direction toward the detection channel introduction port 24, the dust can be prevented from entering the detection channel 27 through the detection channel introduction port 24.

Moreover, when the detection channel introduction port 24 and the detection channel discharge port 30 are formed like the present embodiment, to form with only the parts of the secondary flow channel 20 is difficult from the point of view of forming a metal mold. Then, it can be actualized by forming protrusions at a member on the main flow tube 10 side (Fig. 8B), and combining the protrusions with recesses which are formed at a member of the secondary flow channel portion 20.

### (Third Embodiment)

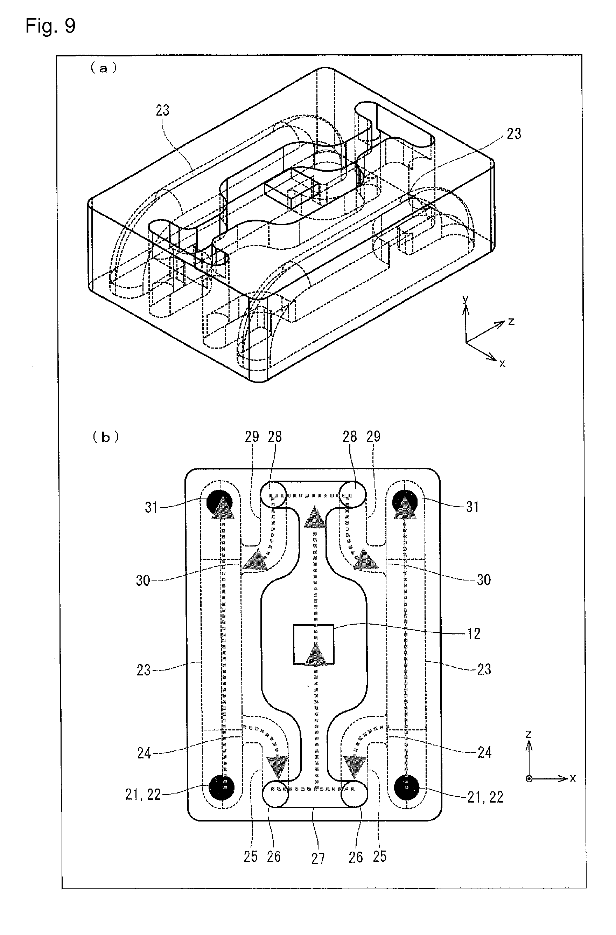

Next, still another embodiment of the present invention will be described with reference to Figs. 9A and 9B. Figs. 9A and 9B are diagrams illustrating another constitution of the flow channel of the secondary flow channel portion 20, Fig. 9A is a perspective view illustrating the constitution of the secondary flow channel portion 20 of the present embodiment, and Fig. 9B is a top view illustrating the constitution of the secondary flow channel portion 20 of the present embodiment.

The present embodiment is different from the embodiment with respect to the number of the diversion flow channel blocks (the diversion flow channel introduction port 21, the introduction channel 22, the diversion flow channel 23, the detection channel introduction port 24, the first communication channel 25, the third communication channel 28, the fourth communication channel 29, the detection channel discharge port 30, and the diversion flow channel discharge port 31) which are included in the secondary flow channel portion 20. Namely, in the present embodiment, as illustrated in Figs. 9A and 9B, two diversion flow channel blocks are disposed at both sides of the detection channel 27 (the x-direction and the minus x-direction), respectively.

With this, even when there exists a deviation of the gas which flows through the main flow tube 10, the flow velocity distribution of the gas, which flows through the detection channel 27, can be prevented from deviating.

Note that, the number of the diversion flow channel blocks is not limited to two, and any number is available as long as the diversion flow channels constitute a pair or pairs with respect to the detection channel 27.

### (Fourth Embodiment)

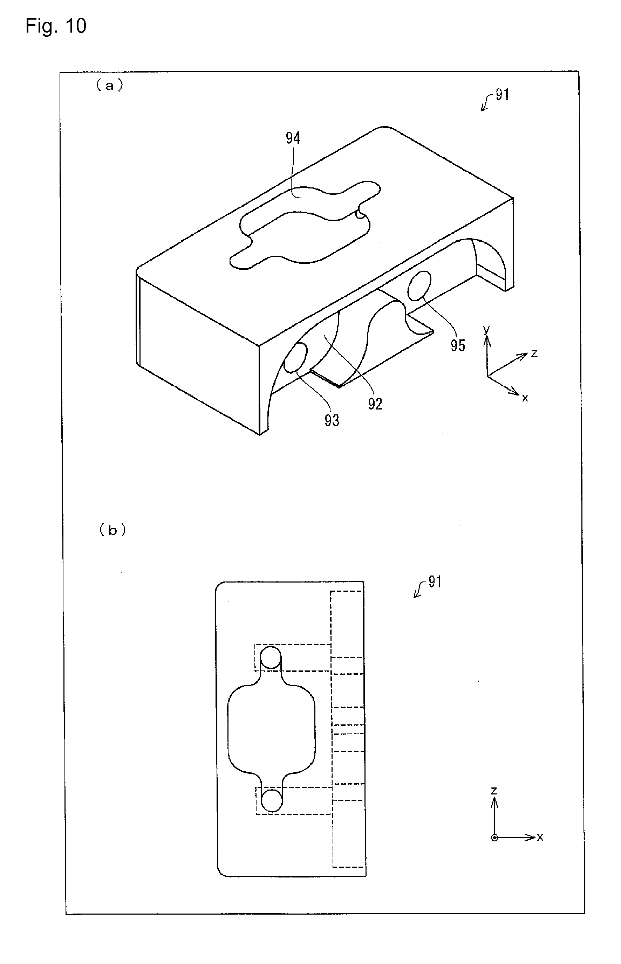

Next, still another embodiment of the present invention will be described with reference to Figs. 10A and 10B. Figs. 10A and 10B are diagrams illustrating the constitution of the secondary flow channel portion 91 in the present embodiment, Fig. 10A is a perspective view of the secondary flow channel portion 91, and Fig. 10B is a top view of the secondary flow channel portion 91.

The present embodiment is different from the embodiment with respect to the points that the diversion flow channel 92 does not include a member corresponding to the side wall on the x-direction side of the diversion flow channel 23, and the flow channel from the detection channel introduction port 93 to the detection channel 94 does not include a member corresponding to the first communication channel 25.

In the present embodiment, because there is no member corresponding to the side wall on the x-direction side of the diversion flow channel 23, the wall surface of the recess portion, which is formed in the base member 17, forms the side wall of the diversion flow channel 92.

The present invention is not limited to the respective embodiments, but can be variously modified within the scope which is defined by the claims, and an embodiment, which is obtained by suitably combining the technical means disclosed in the different embodiments respectively, is also covered by the technical scope of the present invention.

As described above, the flow measurement structure according to the present invention includes the main flow channel through which the fluid flows, and the secondary flow channel where the fluid is diverted from the main flow channel, supplied to the detection element for measuring the flow rate, and thereafter returned to the main flow channel, wherein the secondary flow channel includes the first tributary channel where the fluid is diverted from the main flow channel and returned to the main channel without being supplied to the detection element, and the second tributary channel where the fluid is diverted from the first tributary channel and supplied to the detection element, and wherein the first tributary channel includes the smooth flow portion in which the fluid flows smoothly between the both end portions connected with the main flow channel, and the first chamber and the second chamber which are adjacent to the smooth flow portion, and divided by the partition provided so as to obstruct the flow of the fluid, and the both end portions of the second tributary channel are respectively connected with the first chamber and the second chamber.

According to the constitution, the fluid, which has entered the first tributary channel, flows smoothly in the smooth flow portion, and returns to the main flow channel, it is difficult for the dust to be accumulated in the first tributary channel.

Furthermore, a part of the fluid, which has entered the first tributary channel, flows to the second tributary channel through the end portion connected with the first chamber or the second chamber due to the partition. On the other hand, the dust, which has entered the first tributary channel, passes through the smooth flow portion due to the easiness of flowing, so that it is difficult for the dust to enter the second tributary channel.

In this manner, according to the constitution, the dust, which has entered the first tributary channel, is not accumulated, and tends to flow directly to the main flow channel, and it is difficult for the dust to enter the second tributary channel, and therefore, difficult to adhere to the detection element for measuring the flow rate which is disposed at the second tributary channel.

Accordingly, the results, which have been detected by the detection element, seldom suffer from an influence of the dust, and therefore, a flow measurement structure whose errors caused by the dust are minor can be actualized.

In the flow measurement structure according to the present invention, the smooth flow portion may be provided with the two curbed portions which smoothly change the travelling direction of the fluid, and both end portions of the second tributary channel may be connected with the centers of curvatures of the curbed portions in the first chamber and the second chamber.

According to the constitution, the dust, which has entered the first tributary channel, passes through the vicinity of the curbed portions due to the centrifugal force, and therefore, it is difficult for the dust to move toward the centers of curvatures of the curbed portions. Accordingly, it is difficult for the dust to enter the second tributary channel whose end portions are connected with the centers of curvatures of the curbed portions.

As a result, the dust can be prevented from entering the second tributary channel, and a flow measurement structure whose errors caused by the dust are minor can be actualized.

In the flow measurement structure according to the present invention, both end portions of the second tributary channel may be connected with the centers of the first chamber and the second chamber.

According to the constitution, the end portions of the second tributary channel are positioned apart from the wall surface which faces the travelling direction of the fluid, so that, even when the dust flows along the wall surface, the dust can be prevented from entering the second tributary channel.

As a result, a flow measurement structure, whose errors caused by the dust are further minor, can be actualized.

In the flow measurement structure according to the present invention, two first tributary channels mentioned above may be disposed across the second tributary channel.

According to the constitution, the fluid enters the second tributary channel through the two first tributary channels. Accordingly, even when the flow of fluid deviates, the flow of fluid is equalized at the secondary flow channel, so that the measurement results without deviation can be obtained by calculation.

The above-mentioned advantageous effect can be obtained also by the flow measurement device in which the detection element for measuring the flow rate is disposed at the second tributary channel in the flow measurement structure.

### INDUSTRIAL APPLICABILITY

Even when dust is mixed with the fluid, the flow rate of the fluid can be measured with accuracy, and therefore, the present invention is suitable for a flow measurement device which is used in a place where dust is easily mixed with the fluid, and the like, for example, a gas meter which is installed in a factory, and the like.

### DESCRIPTION OF SYMBOLS

| | |
|---|---|
| 1 | flow measurement device (flow measurement structure) |
| 5 | main flow channel |
| 10 | main flow tube |
| 12 | flow rate detection element (detection element) |
| 20 | secondary flow channel portion (secondary flow channel) |
| 21 | diversion flow channel introduction port |
| 22 | introduction channel |
| 23 | diversion flow channel (first tributary channel) |
| 24 | detection channel introduction port |
| 25 | first communication channel (second tributary channel) |
| 26 | second communication channel (second tributary channel) |
| 27 | detection channel (second tributary channel) |
| 28 | third communication channel (second tributary channel) |
| 29 | fourth communication channel (second tributary channel) |
| 30 | detection channel discharge port |
| 31 | diversion flow channel discharge port |
| 41 | first chamber |
| 42 | second chamber |
| 43 | partition |
| 45 | smooth flow portion |

## Claims

1. A flow measurement structure comprising: a main flow channel through which fluid flows; and a secondary flow channel where the fluid is diverted from the main flow channel, supplied to a detection element for measuring a flow rate, and thereafter returned to the main flow channel,
wherein the secondary flow channel includes
a first tributary channel where the fluid is diverted from the main flow channel and returned to the main channel without being supplied to the detection element, and
a second tributary channel where the fluid is diverted from the first tributary channel and supplied to the detection element, and
wherein the first tributary channel includes
a smooth flow portion in which the fluid flows smoothly between both end portions connected with the main flow channel, and
a first chamber and a second chamber which are adjacent to the smooth flow portion, and divided by a partition provided so as to obstruct a flow of the fluid, and
both end portions of the second tributary channel are respectively connected with the first chamber and the second chamber.

2. The flow measurement structure according to claim 1, wherein two curbed portions for smoothly changing a travelling direction of the fluid are disposed at the smooth flow portion, and
wherein the both end portions of the second tributary channel are connected with centers of curvatures of the curbed portions at the first chamber and the second chamber.

3. The flow measurement structure according to claim 1, wherein the both end portions of the second tributary channel are connected with centers of the first chamber and the second chamber.

4. The flow measurement structure according to any one of claims 1 to 3, wherein the first tributary channel comprises the two first tributary channels which are disposed across the second tributary channel.

5. A flow measurement device comprising: a detection element for measuring a flow rate which is disposed at the second tributary channel of the flow measurement structure according to any one of claims 1 to 4.
